(19) Europäisches Patentamt
European Patent Office
Office européen des brevets

(11) **EP 2 598 385 B1**

(12) **EUROPÄISCHE PATENTSCHRIFT**

(45) Veröffentlichungstag und Bekanntmachung des Hinweises auf die Patenterteilung:
**27.09.2017 Patentblatt 2017/39**

(21) Anmeldenummer: **11725022.5**

(22) Anmeldetag: **30.05.2011**

(51) Int Cl.:
*B60T 1/10* (2006.01)   *B60T 7/04* (2006.01)
*B60T 7/10* (2006.01)   *B60T 8/17* (2006.01)
*B60T 8/172* (2006.01)   *B60T 8/1755* (2006.01)
*B60T 8/36* (2006.01)   *B60T 8/40* (2006.01)
*B60T 13/66* (2006.01)   *B60T 13/68* (2006.01)
*B60T 13/74* (2006.01)

(86) Internationale Anmeldenummer:
**PCT/EP2011/058803**

(87) Internationale Veröffentlichungsnummer:
**WO 2012/019802 (16.02.2012 Gazette 2012/07)**

(54) **KOPPLUNGSVORRICHTUNG ZUM VERBINDEN EINES BREMSEINGABEELEMENTS MIT EINEM HAUPTBREMSZYLINDER UND BREMSSYSTEM MIT EINER DERARTIGEN KOPPLUNGSVORRICHTUNG**

COUPLING DEVICE FOR CONNECTING A BRAKE INPUT ELEMENT TO A MAIN BRAKE CYLINDER AND BRAKING SYSTEM WITH SUCH A COUPLING DEVICE

DISPOSITIF DE COUPLAGE POUR RELIER UN ÉLÉMENT DE COMMANDE DE FREINAGE À UN MAÎTRE-CYLINDRE DE FREIN ET SYSTEME DE FREINAGE AVEC UN TEL DISPOSITIF DE COUPLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2010 DE 102010038439**
**20.10.2010 DE 102010042694**

(43) Veröffentlichungstag der Anmeldung:
**05.06.2013 Patentblatt 2013/23**

(73) Patentinhaber: **Robert Bosch GmbH**
**70442 Stuttgart (DE)**

(72) Erfinder:
• **WEIBERLE, Reinhard**
**71665 Vaihingen/Enz (DE)**
• **JAHNZ, Timo**
**74354 Besigheim (DE)**

(56) Entgegenhaltungen:
EP-A1- 0 389 993          EP-A2- 2 019 010
WO-A1-2010/069656         DE-A1- 19 502 925
DE-A1-102005 024 577      DE-A1-102006 030 168
DE-A1-102006 040 424      DE-A1-102006 056 907
DE-A1-102007 016 862      DE-A1-102008 001 061
DE-A1-102008 001 522      DE-A1-102008 038 320
DE-A1-102009 033 499      DE-A1-102009 047 263
US-A1- 2009 039 702

EP 2 598 385 B1

**Beschreibung**

Die Erfindung betrifft eine Kopplungsvorrichtung zum Verbinden eines Bremseingabeelements mit einem Hauptbremszylinder eines Fahrzeugs. Des Weiteren betrifft die Erfindung ein Verfahren zum Betreiben einer derartigen Kopplungsvorrichtung.

Stand der Technik

Elektro- und Hybridfahrzeuge weisen ein für ein rekuperatives Bremsen ausgelegtes Bremssystem mit einem bei dem rekuperativen Bremsen generatorisch betriebenen Elektromotor auf. Die bei dem rekuperativen Bremsen gewonnene elektrische Energie wird nach einem Zwischenspeichern vorzugsweise für ein Beschleunigen des Fahrzeugs verwendet. Auf diese Weise sind eine Verlustleistung, welche ein herkömmliches Fahrzeug bei einem häufigen Bremsen während einer Fahrt aufweist, ein Energieverbrauch und eine Schadstoffemission des Elektro- oder Hybridfahrzeugs reduzierbar.

Allerdings setzt das generatorische Betreiben des Elektromotors, beispielsweise des elektrischen Antriebsmotors, in der Regel eine bestimmte Mindestgeschwindigkeit des Fahrzeugs voraus. Ein rekuperatives Bremssystem ist somit häufig nicht in der Lage, so lange ein generatorisches Bremsmoment auf die Räder des Fahrzeugs auszuüben, bis sich das zuvor fahrende Fahrzeug im Stillstand befindet. Ein Hybridfahrzeug weist deshalb zusätzlich zu dem rekuperativ betriebenen Elektromotor oft noch ein hydraulisches Bremssystem auf, mittels welchem zumindest in einem niedrigen Geschwindigkeitsbereich die wegfallende Bremswirkung der rekuperativen Bremse kompensierbar ist. In diesem Fall kann auch bei einem vollen elektrischen Energiespeicher, wenn die rekuperative Bremse meistens kein Bremsmoment auf die Räder ausübt, das gesamte Bremsmoment über das hydraulische Bremssystem aufgebracht werden.

Andererseits ist es in manchen Situationen wünschenswert, eine möglichst niedrige hydraulische Bremskraft auf die Räder auszuüben, um einen hohen Rekuperationsgrad zu erzielen. Beispielsweise wird nach Schaltvorgängen häufig der abgekoppelte Generator als rekuperative Bremse aktiviert, um ein verlässliches Aufladen des Zwischenspeichers und eine hohe Energieeinsparung zu gewährleisten.

Im Allgemeinen bevorzugt ein Fahrer ein Gesamtbremsmoment seines Fahrzeugs, welches seiner Betätigung eines Bremseingabeelementes, wie beispielsweise seiner Bremspedalbetätigung, unabhängig von einem Aktivieren oder einem Deaktivieren der rekuperativen Bremse entspricht. Manche Elektro- und Hybridfahrzeuge weisen deshalb eine Automatik auf, welche das Bremsmoment des hydraulischen Bremssystems an das aktuelle Bremsmoment der rekuperativen Bremse so anpassen soll, dass ein gewünschtes Gesamtbremsmoment eingehalten wird. Der Fahrer muss damit nicht selbst über ein Anpassen der Betätigung des Bremseingabeelements an das aktuelle Bremsmoment der rekuperativen Bremse die Aufgabe des Verzögerungsreglers übernehmen. Beispiele für eine derartige Automatik sind Brake-by-Wire-Bremssysteme, insbesondere EHB-Systeme, wie sie beispielsweise unter http://en.wikipedia.org/wiki/Brake-by-wire beschrieben sind.

In der DE 10 2009 033 499 A1 ist eine Bremsanlage für Kraftfahrzeuge beschrieben. Die Bremsanlage umfasste einen Hauptbremszylinder und eine Pedalentkopplungseinheit mit einem Rückhaltekolben, welcher zusammen mit einem Stangenkolben des Hauptbremszylinders eine mit einem hydraulischen Druck beaufschlagbare Kammer begrenzt. Zum Bereitstellen des hydraulischen Drucks wird eine elektrisch steuerbare Druckbereitstellungseinrichtung verwendet.

Die DE 10 2009 047 263 A1 beschreibt einen elektromechanischen Bremskraftverstärker mit einer pedalverstellbaren Kolbenstange und einem elektromechanischen Aktuator. Die unabhängig von der auf das Pedal ausgeübten Muskelkraft vorgebbare Aktuatorkraft des elektromechanischen Aktuators soll "eine verhältnismäßig große Relativbewegung des Eingangselements gegenüber dem Aktuator sowie unterschiedliche Geschwindigkeiten und Beschleunigungen des Eingangselements und des Aktuators möglich" machen. Auf diese Weise sollen ein erster Betriebsmodus und ein zweiter Betriebsmodus des elektromechanischen Bremskraftverstärkers realisierbar sein, wobei in dem ersten Betriebsmodus eine Relativauslenkung zwischen Aktuator und Kolbenstange so eingestellt wird, dass ein Leerweg nicht überwunden wird, während im zweiten Betriebsmodus der Leerweg durch Einstellen der Relativauslenkung überwindbar ist. Insbesondere soll ein Verhältnis von Aktuatorkraft zur Muskelkraft in Abhängigkeit einer Verstellgeschwindigkeit/Betätigungsgeschwindigkeit und/oder einer Beschleunigung des Verstärkerkörpers und/oder der Kolbenstange eingestellt werden.

Des Weiteren offenbart die DE 10 2007 016 862 A1 ein Bremssystem für ein Fahrzeug mit einer Aktuatoreinheit, die ein Bremspedal, einen Hauptbremszylinder, einen Pedalsimulator und einen elektromechanischen Bremskraftverstärker umfasst.

Offenbarung der Erfindung

Die Erfindung schafft eine Kopplungsvorrichtung zum Verbinden eines Bremseingabeelements mit einem Hauptbremszylinder eines Fahrzeugs mit den Merkmalen des Anspruchs 1.

Vorteile der Erfindung

Die vorliegende Erfindung bietet eine Kopplungsvorrichtung, welche in dem ersten Betriebsmodus als Entkopplungsvorrichtung zum Entkoppeln des Bremseingabeelements von dem Hauptbremszylinder und in dem zweiten Betriebsmodus als Ankopplungsvorrichtung zum Ankoppeln des Bremseingabeelements an den Hauptbremszylinder verwendbar ist. Somit wird in dem ersten Betriebsmodus ein Innendruck des Hauptbremszylinders trotz einer Betätigung des Bremseingabeelements, durch welche der Eingangskolben aus seiner Ausgangsstellung um einen Einbremsweg kleiner als dem vorgegebenen ersten Mindest-Einbremsweg verstellt wird, nicht gesteigert. Demgegenüber kann der Fahrer in dem zweiten Betriebsmodus bereits bei einer Betätigung des Bremseingabeelements, durch welche der Eingangskolben aus seiner Ausgangsstellung um den Verstellweg zwischen dem vorgegebenen zweiten Mindest-Einbremsweg und dem ersten Mindest-Einbremsweg verstellt wird, direkt in den Hauptbremszylinder hineinbremsen.

Gleichzeitig gewährleistet die erfindungsgemäße Kopplungsvorrichtung die Vorteile eines Brake-By-Wire-Systems. Sowohl in dem ersten Betriebsmodus als auch in den zweiten Betriebsmodus besteht die Möglichkeit, den Innendruck in dem Hauptbremszylinder unabhängig von der Betätigung des Bremseingabeelements einzustellen. Ebenso kann die Entkopplung zum Verblenden eines rekuperativen Bremsmoments eines rekuperationsfähigen Bremssystems genutzt werden.

Ein weiter Vorteil der erfindungsgemäßen Technologie besteht darin, dass sowohl in dem ersten Betriebsmodus als auch in dem zweiten Betriebsmodus der Eingangskolben bei einer (längeren) Betätigung des Bremseingabeelements, d.h. nach einer Überwindung des ersten Mindest-Einbremswegs oder des zweiten Mindest-Einbremswegs den Ausgangskolben kontaktiert, und damit die auf das Bremseingabeelement ausgeübte Fahrerbremskraft über den Eingangskolben auf den Ausgangskolben übertragen wird. Somit kann bei einer derartigen Betätigung des Bremseingabeelements die von dem Fahrer auf das Bremseingabeelement ausgeübte Kraft zum Erhöhen des Bremsdrucks in dem Hauptbremszylinder verwendet werden. Mittels der erfindungsgemäßen Technologie ist deshalb eine Bremseinrichtung verwendbar, deren Leistung und deren Energieaufnahme geringeren Anforderungen als eine Fremdkraftbremseinrichtung eines Brake-By-Wire-Systems genügen müssen. Gleichzeitig gewährleistet die verwendbare Bremseinrichtung, die abhängig von einem Betriebsmodus als Fremdkraftbremse oder als Hilfskraftbremse verwendet wird, ein sicheres Abbremsen eines Fahrzeugs. Somit entfallen die vergleichsweise hohen Kosten eines Brake-By-Wire-Systems bei der vorliegenden Erfindung. Außerdem steigert die direkte Kraftübertragung von dem Bremseingabeelement auf den Ausgangskolben über den Eingangskolben bei einem Einbremsweg von mindestens dem zweiten Mindest-Einbremsweg den Sicherheitsstandard des damit ausgestatteten Fahrzeugs.

Die vorliegende Erfindung ist für ein rekuperationsfähiges und/oder bremskraftverstärktes Bremssystem verwendbar. Sie bietet insbesondere die Möglichkeit, mittels eines Sensors oder mittels einer Schätzung zu ermitteln, welches Gesamt-Bremsmoment von dem Fahrer und/oder einem Steuersystem des Fahrzeugs gewünscht wird und welches aktuelle rekuperative Bremsmoment durch die rekuperative Bremse ausgeübt wird. Anschließend kann eine Differenz zwischen dem gewünschten Gesamt-Bremsmoment und dem rekuperativen Bremsmoment ermittelt werden, welches nach einem Entkoppeln des Bremseingabeelements mittels eines Einstellens eines entsprechenden Innendrucks in dem Hauptbremszylinder aktiv festgelegt wird. Dies ermöglicht ein Verblenden des (zeitlich variablen) rekuperativen Bremsmoments, ohne dass der Fahrer dazu einen zusätzlichen Arbeitsaufwand ausführen muss. Für die Ausführung der in diesem Absatz beschriebenen Verfahrensschritte ist keine teure Elektronik notwendig. Eine ausreichende Rekuperationseffizienz ist somit bei einer Verwendung der vorliegenden Erfindung zu vertretbaren Kosten gewährleistet. Vorteilhafter Weise sind die hier beschriebenen Verfahrensschritte zusätzlich so schnell ausführbar, dass schnell auf eine zeitliche Änderung des rekuperativen Bremsmoments durch ein entsprechendes Reduzieren oder Erhöhen des Innendrucks in dem Hauptbremszylinder reagiert werden kann.

Mittels der auch als Bremskraftverstärker bezeichenbaren Fremdkraftbremseinrichtung kann ein gewünschter Innendruck auf einfache Weise aktiv in dem Hauptbremszylinder eingestellt werden. Als geeignete Fremdkraftbremseinrichtung ist beispielsweise ein steuerbarer Bremskraftverstärker, wie insbesondere ein elektromechanischer Bremskraftverstärker, verwendbar. Somit kann insbesondere bei einer Entkopplung des Bremspedals ein Generator-Bremsmoment eines elektrischen Generators mittels der Fremdkraftbremseinrichtung rekuperiert werden. Zusätzlich kann die Fremdkraftbremseinrichtung auch dazu verwendet werden, die von einem Fahrer aufzubringende Kraft zum Abbremsen des Fahrzeugs bis zum Stillstand zu reduzieren.

Bei einer Betätigung des Bremseingabeelements entsprechend einer Verstellgeschwindigkeit größer als einer vorgegebenen Grenz-Verstellgeschwindigkeit wird die Kopplungsvorrichtung automatisch in den zweiten Betriebsmodus (Ankopplungsmodus) überführt. Somit bewirkt ein schnelles Betätigen des Bremseingabeelements automatisch ein früheres Kontaktieren des Ausgangskolbens durch den Eingangskolben, und damit eine verstärkte (frühere) Kraftübertragung der Fahrerbremskraft zum Einbremsen in den Hauptbremszylinder.

In einer weiteren vorteilhaften Ausführungsform umfasst die Kopplungsvorrichtung ein Hydraulik-Gehäuse mit einer zumindest teilweise mit einer Flüssigkeit gefüllten Innenkammer, in welche der Eingangskolben und der Ausgangskolben zumindest teilweise hineinragen. In diesem Fall besteht die Möglichkeit, die dem Hineinverstellen des Eingangskolbens entgegenwirkende Kraft vorteilhaft zu beeinflussen.

Vorteilhafterweise ist die Innenkammer des Hydraulik-Gehäuses über zumindest eine erste Leitung mit einem als Kolben-Zylinder-Einheit ausgebildeten Pedalsimulator hydraulisch verbunden. Dies ist eine kostengünstig realisierbare Ausführung eines vorteilhaften Pedalsimulators.

Insbesondere kann der als Kolben-Zylinder-Einheit ausgebildete Pedalsimulator eine nicht-lineare Federcharakteristik entsprechend einer Bremscharakteristik aufweisen. dies gewährleistet ein standartgemäßes Bremsgefühl für den Fahrer bei der Betätigung des Bremsbetätigungselements.

Die in den oberen Absätzen aufgezählten Vorteile sind auch bei einem Bremssystem mit einer derartigen Kopplungsvorrichtung und einem Fahrzeug mit einer entsprechenden Kopplungsvorrichtung, bzw. mit einem solchen Bremssystem, gewährleistet.

Kurze Beschreibung der Zeichnungen

Weitere Merkmale und Vorteile der Erfindung werden nachfolgend anhand der Figuren erläutert. Es zeigen:

Fig. 1 eine schematische Darstellung einer Ausführungsform der Kopplungsvorrichtung;

Fig. 2 eine schematische Darstellung einer der Kopplungsvorrichtung, welche nicht von der vorliegenden Erfindung umfasst ist; und

Fig. 3 ein Flussdiagramm zum Darstellen eines Verfahrens, welches nicht von der vorliegenden Erfindung umfasst ist.

Ausführungsformen der Erfindung

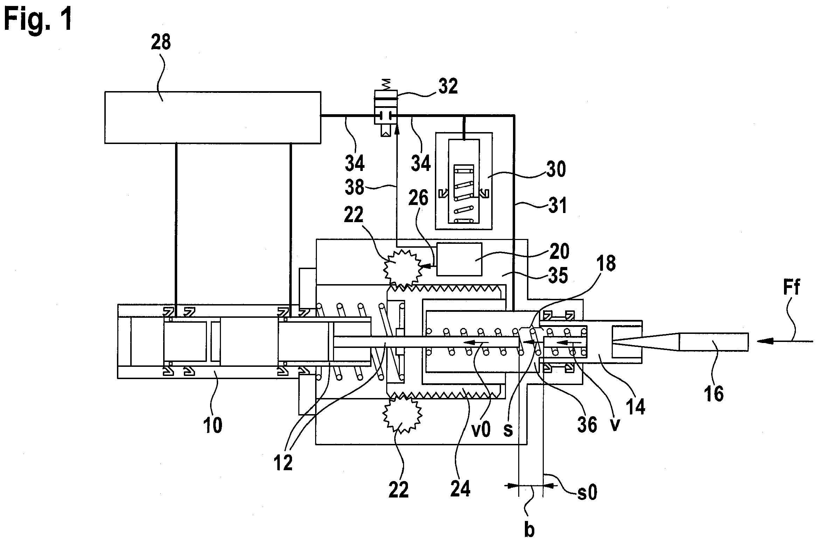

Fig. 1 zeigt eine schematische Darstellung einer Ausführungsform der Kopplungsvorrichtung.

Die in Fig. 1 schematisch wiedergegebene Kopplungsvorrichtung weist einen an einem Hauptbremszylinder 10 angeordneten/anordbaren Ausgangskolben 12 auf. Mittels eines Hineinschiebens zumindest eines Teils des Ausgangskolbens 12 in den Hauptbremszylinder 10 ist ein Druck in mindestens einem Innenvolumen des Hauptbremszylinders 10 steigerbar. Die im Weiteren beschriebene erfindungsgemäße Technologie ist nicht auf einen bestimmten Typ des Hauptbremszylinders 10 oder des Ausgangskolbens 12 beschränkt.

Die Kopplungsvorrichtung umfasst auch einen Eingangskolben 14, welcher so an einem (nur teilweise wiedergegebenen) Bremseingabeelement 16 anordbar ist/angeordnet ist, dass der Eingangskolben 14 bei einer Betätigung des Bremseingabeelements 16 aus einer Ausgangsstellung s0 um einen Einbremsweg s verstellbar ist. An dem Bremseingabeelement 16 kann ein (nicht dargestellter) Sensor, beispielsweise ein Pedalwegsensor oder ein Kraftsensor, angebracht sein, mittels welchem eine Betätigung des Bremseingabeelements 16 ermittelbar ist. Das Bremseingabeelement 16 kann beispielsweise als Bremspedal ausgebildet sein. Es wird jedoch darauf hingewiesen, dass die Ausführbarkeit der hier beschriebenen Kopplungsvorrichtung nicht eine bestimmte Ausbildung des Bremseingabeelements 16 oder des Eingangskolbens 14 voraussetzt.

Vorteilhafterweise ist die Ausgangsstellung s0 des Eingangskolbens 14 so festgelegt, dass zwischen dem (nicht betätigten) Ausgangskolben 12 und dem bei einer Nichtbetätigung des Bremseingabeelements 16 in seiner Ausgangsstellung s0 vorliegenden Eingangskolben 14 ein Spalt 18 liegt. Man kann dies auch so beschreiben, dass die beiden Kolben 12 und 14 sich in ihren Ausgangsstellungen bei einer Nichtbetätigung des Bremseingabeelements 16 nicht kontaktieren. Eine Kraftübertragung zwischen den in ihren Ausgangsstellungen vorliegenden Kolben 12 und 14 ist somit aufgrund des Spalts 18 unterbunden. Über den Spalt 18 zwischen den Kolben 12 und 14 ist somit eine Entkopplung des Bremseingabeelements 16 von dem Hauptbremszylinder 10 realisierbar.

Demgegenüber bewirkt ein Verstellen des Eingangskolbens 14 aus seiner Ausgangsstellung s0 um einen Einbremsweg s von mindestens einem vorgegebenen ersten Mindest-Einbremsweg, dass sich die beiden Kolben 12 und 14 kontaktieren. Auf diese Weise ist eine auf das Bremseingabeelement 16 ausgeübte Fahrerbremskraft Ff über den aus seiner Ausgangsstellung s0 um den Einbremsweg s von mindestens dem ersten Mindest-Einbremsweg verstellten Eingangskolben 14 auf den Ausgangskolben 12 übertragbar. Unter der übertragbaren Fahrerbremskraft Ff kann eine von dem Fahrer auf das Bremseingabeelement 16 ausgeübte Teilkraft verstanden werden. Zusätzlich zu der Fahrerbremskraft Ff kann der Fahrer noch eine weitere Teilkraft zum Überwinden der dem Verstellen des Bremseingabeelements 16 und/oder des Eingangskolbens 14 entgegenwirkenden Reibungskräfte auf das Bremseingabeelement 16 aufbringen.

Mittels der über den Eingangskolben 14 auf den Ausgangskolben 12 übertragenen Fahrerbremskraft Ff kann der Ausgangskolben 12 so verstellt werden, dass das mindestens eine Innenvolumen des Hauptbremszylinders 10 verkleinert, und somit der darin vorliegende Innendruck gesteigert wird. Mittels des gesteigerten Innendrucks kann ein Bremsdruck mindestens eines (nicht skizzierten) Radbremszylinders mindestens eines an den Hauptbremszylinder 10 ankoppelbaren (nicht dargestellten) Bremskreises gesteigert werden. Auf diese Weise ist mindestens ein auf mindestens ein Rad des Fahrzeugs ausübbares (hydraulisches) Bremsmoment des mindestens einen Radbremszylinders aufbaubar. Es wird darauf hingewiesen, dass die Verwendbarkeit der hier beschriebenen Kopplungsvorrichtung nicht eine spezielle Ausbildung des mindestens einen Bremskreises oder einen bestimmten Typ des darin angeordneten Radbremszylinders voraussetzt.

Die Kopplungsvorrichtung umfasst eine Fremdkraftbremseinrichtung, mittels welcher eine (nicht skizzierte) Fremdkraft auf den Ausgangskolben 12 so übertragbar ist, dass mittels der auf den Ausgangskolben 12 übertragenen Fremdkraft der Innendruck in dem Hauptbremszylinder 10 steigerbar ist. Die Fremdkraftbremseinrichtung kann beispielsweise als Bremskraftverstärker, insbesondere als elektromechanischer Bremskraftverstärker und/oder als hydraulischer Bremskraftverstärker (i-Booster), ausgebildet sein. Bevorzugter Weise ist die Fremdkraftbremseinrichtung ein stetig verstellbarer/steuerbarer Bremskraftverstärker (aktiver Bremskraftverstärker). Es wird jedoch darauf hingewiesen, dass die Ausbildung der Fremdkraftbremseinrichtung nicht auf die hier aufgezählten Beispiele für Bremskraftverstärker beschränkt ist.

Die Fremdkraftbremseinrichtung kann ein mittels einer Steuereinrichtung 20 ansteuerbares motorisiertes Getriebe 22 (Elektromotor) umfassen, mittels welchem ein an dem Ausgangskolben 12 angeordneter/anordbarer Unterstützungskolben 24 so verstellbar ist, dass der Ausgangskolben 12 zusammen mit dem Unterstützungskolben 24 zum Variieren des Innendrucks in dem Hauptbremszylinder 10 verstellbar ist. Insbesondere kann der Ausgangskolben 12 trotz der unterbundenen Kraftübertragung von dem Eingangskolben 14 auf den von dem Eingangskolben 14 beabstandeten Ausgangskolben 12 mittels der Fremdkraftbremseinrichtung verstellbar sein. Auf weitere vorteilhafte Auslegungsmöglichkeiten der Fremdkraftbremseinrichtung wird unten genauer eingegangen.

Die Kopplungsvorrichtung der Fig. 1 weist einen ersten Betriebsmodus auf, in welchem während eines Verstellens des Eingangskolbens 14 aus seiner Ausgangsstellung s0 um einen Einbremsweg s kleiner als den ersten Mindest-Einbremsweg der Eingangskolben 14 so von dem Ausgangskolben 12 beabstandet ist, dass eine Kraftübertragung von dem aus seiner Ausgangsstellung s0 um den Einbremsweg s kleiner als den ersten Mindest-Einbremsweg verstellten Eingangskolben 14 auf den Ausgangskolben 12 unterbunden ist. Ein Betätigen des Bremseingabeelements 16 mit einer vergleichsweise geringen Fahrerbremskraft Ff bewirkt somit ein Verstellen des Eingangskolbens 14 aus seiner Ausgangsstellung s0 um einen (kleinen) Einbremsweg s kleiner als dem ersten Mindest-Einbremsweg, welcher zur Überwindung des Spalts 18 nicht ausreichend ist. Somit ist in dem ersten Betriebsmodus gewährleistet, dass der Fahrer erst ab einer durch den ersten Mindest-Einbremsweg definierten Mindestbetätigung direkt in den Hauptbremszylinder 10, bzw. in den mindestens einen Radbremszylinder, hineinbremst.

Des Weiteren ist die Kopplungsvorrichtung in mindestens einen zweiten Betriebsmodus mit einem zweiten Mindest-Einbremsweg kleiner als dem ersten Mindest-Einbremsweg überführbar. In dem zweiten Betriebsmodus der Kopplungsvorrichtung ist der aus seiner Ausgangsstellung s0 um einen Einbremsweg s kleiner als dem zweiten Mindest-Einbremsweg verstellte Eingangskolben 14 so von dem Ausgangskolben 12 beabstandet, dass eine Kraftübertragung von dem Eingangskolben 14 auf den Ausgangskolben 12 unterbunden ist. Man kann dies auch so umschreiben, dass während eines Verstellens des Eingangskolbens 14 aus seiner Ausgangsstellung s0 um den Einbremsweg s kleiner als dem zweiten Mindest-Einbremsweg die Kraftübertragung von dem Eingangskolben 14 auf den Ausgangskolben 12 aufgrund ihrer Beabstandung unterbunden ist. Demgegenüber ist die Fahrerbremskraft Ff über den aus seiner Ausgangsstellung s0 um einen Einbremsweg s zwischen dem zweiten Mindest-Einbremsweg und dem ersten Mindest-Einbremsweg verstellten Eingangskolben 14 auf den Ausgangskolben 12 übertragbar.

Der zweite Betriebsmodus der Kopplungsvorrichtung gewährleistet somit für den Fahrer die Möglichkeit, bereits nach einer Überwindung eines kürzeren Leerwegs (dem zweiten Mindest-Einbremsweg) direkt in den Hauptbremszylinder 10, bzw. in den mindestens einen Radbremszylinder, hineinzubremsen. Somit kann das Bremssystem mit der in den zweiten Betriebsmodus überführten Kopplungsvorrichtung auch unter Verzicht auf eine Verwendung einer bremssystemeigenen Elektronik schneller auf die Betätigung des Bremseingabeelements 16 durch den Fahrer reagieren.

Demgegenüber gewährleistet der erste Betriebsmodus eine vorteilhafte Entkopplung zwischen dem Bremseingabeelement 16 und dem Hauptbremszylinder 10 mit einem größeren Leerweg (dem ersten Mindest-Einbremsweg). Die aufgrund der Entkopplung möglicherweise auftretenden (leichten) Einschränkungen des Bremsgefühls/Pedalgefühls sind aufgrund ihrer niedrigen Größe für den Fahrer nicht/kaum wahrnehmbar und somit tolerierbar. Die Entkopplung des Bremseingabeelements 16 von dem Hauptbremszylinder 10 kann durch eine vorteilhafte Festlegung des ersten Mindest-Einbremswegs so ausgebildet werden, dass sie insbesondere in Bereichen der Bremsbetätigung, in welchem oft ein Generator zum rekuperativen Bremsen eingesetzt wird, vorliegt. Beispielsweise kann der erste Mindest-Einbremsweg über eine vorteilhafte Höchstbreite b des Spalts 18 so festgelegt werden, dass auch ein höheres Generator-Bremsmoment während der Entkopplung auf mindestens ein Rad des Fahrzeugs ausübbar ist, ohne dass eine von dem Fahrer vorgegebene Soll-Verzögerung des Fahrzeugs überschritten wird. Insbesondere kann die Höchstbreite b des Spalts 18 mindestens dem zur maximalen rekuperativen Verzögerung notwendigen Einbremsweg s entsprechen.

Weitere Möglichkeiten zum vorteilhaften Auslegen des ersten Mindest-Einbremswegs werden unten noch genannt.

Die Steuereinrichtung 20 ist dazu ausgelegt, ab einem Verstellen des Eingangskolbens 14 aus seiner Ausgangsstellung s0 den Ausgangskolben 12 mit der vorgegebenen Brems-Verstellgeschwindigkeit v0 in eine von dem Eingangskolben 14 weggerichtete Richtung zu verstellen. Bei einer Betätigung des Bremseingabeelements 16 verkleinert sich der zwischen den Kolben 12 und 14 vorliegende Spalt 18 um eine Differenz, welche zumindest über die Brems-Verstellgeschwindigkeit v0 und die Verstellgeschwindigkeit v des Eingangskolbens 14 festlegbar/definierbar ist. Die Differenz kann auch gesteigert werden, sofern sich der Motor (Elektromotor) des Getriebes 22 erst mit einem (durch Signallatenz- und Rechenzeiten bedingten) Zeitverzug in Bewegung setzt.

Die Dynamik der Ausgangsstange 12 (Brems-Verstellgeschwindigkeit v0 ist abhängig von der Getriebe- und Motordimensionierung des Getriebes 22 und kann so ausgelegt werden, dass ein Schließen des Spalts 18 und somit ein Kraftschluss zwischen den Kolben 12 und 14 erst ab einem Verstellen des Eingangskolbens 14 um einen festlegbaren (vorteilhaften) Leerweg stattfindet. Somit besteht über eine vorteilhafte Festlegung der mindestens einen Brems-Verstellgeschwindigkeit v0, bzw. mittels einer vorteilhaften Ansteuerung des Getriebes 22 durch das von der Steuereinrichtung 20 ausgegebene Steuersignal 26, die Möglichkeit, bevorzugte Werte für zumindest den ersten Mindest-Einbremsweg und den zweiten Mindest-Einbremsweg zu realisieren.

Der Ausgangskolben 12 ist mittels der Fremdkraftbremseinrichtung mit einer ersten Höchst-Verstellgeschwindigkeit für die Brems-Verstellgeschwindigkeit v0 verstellbar, welche kleiner als eine zweite Höchst-Verstellgeschwindigkeit für die Verstellgeschwindigkeit v des aus seiner Ausgangsstellung s0 verstellten Eingangskolbens 14 ist. Somit ist gewährleistet, dass mittels eines Betätigens des Bremseingabeelements 16 mit einer Höchst-Betätigungsgeschwindigkeit, bei welcher der Eingangskolben 14 mit der zweiten Höchst-Verstellgeschwindigkeit verstellbar ist, die Kopplungsvorrichtung automatisch aus den ersten Betriebsmodus in den zweiten Betriebsmodus überführbar ist.

Man kann dies aus so umschreiben, dass ein Verstellen des Eingangskolbens 14 mit einer Verstellgeschwindigkeit v kleiner als eine durch die erste Höchst-Verstellgeschwindigkeit des Ausgangskolbens 12 vorgegebene Grenz-Verstellgeschwindigkeit ein Schließen des Spalts 18 bei einem größeren Verstellweg s des Eingangkolbens 14 bewirkt. Demgegenüber führt ein Verstellen des Eingangskolbens 14 mit einer Verstellgeschwindigkeit v größer als die vorgegebene Grenz-Verstellgeschwindigkeit zu einem Schließen des Spalts 18 bei einem kleineren Verstellweg s des Eingangkolbens 14. Somit bewirkt bereits das Verstellen des Eingangskolbens 14 mit einer Verstellgeschwindigkeit v kleiner als der Grenz-Verstellgeschwindigkeit, bzw. eine entsprechende Betätigung des Bremseingabeelements 10, dass die Kopplungsvorrichtung automatisch in den ersten Betriebsmodus überführt wird. Bei einer Betätigung des Bremseingabeelements 16 entsprechend einer Verstellgeschwindigkeit v größer als der vorgegebenen Grenz-Verstellgeschwindigkeit wird die Kopplungsvorrichtung automatisch in den zweiten Betriebsmodus überführt. Somit ist bei der hier beschriebenen Kopplungsvorrichtung die Entkopplung zwischen den Kolben 12 und 14 in Abhängigkeit von der Betätigungsgeschwindigkeit des Bremseingabeelements 10 (automatisch) über ein schnelles Betätigen des Bremseingabeelements 16 durch den Fahrer aufhebbar, ohne dass dazu eine Elektronik/Sensorik zum Ermitteln der Betätigungsgeschwindigkeit des Bremseingabeelements 16 notwendig ist. Die bei dem schnellen Betätigen des Bremseingabeelements 16 durch den Fahrer aufgebrachte Energie (Fahrerbremskraft Ff) kann gleichzeitig zur Bremsung genutzt werden. Bei der hier beschriebenen Kopplungsvorrichtung sind die Entkopplung und die Ankopplung des Bremseingabeelements 16 an den Hauptbremszylinder 10 rein passiv, d. h. ohne eine Ansteuerung einer Zusatzaktorik. Damit ist gewährleistet, dass durch eine Ankopplung des Bremseingabeelements 16 an den Hauptbremszylinder 10 in den Betätigungsfällen, in denen eine hohe Leistung des Bremssystems benötigt wird, und der Fahrer deshalb intuitiv eine schnelle Betätigung des Bremseingabeelements 16 ausführt, die Fahrerbremskraft Ff auch zum (schnellen) Aufbauen des vorteilhaften Bremsdrucks in den mindestens einen Radbremszylinder genutzt wird. Auf diese Weise ist zusätzlich die von der Fremdkraftbremsanlage bereitzustellende elektrische Leistung deutlich reduzierbar. Dies erlaubt eine kostengünstigere Auslegung der Fremdkraftbremseinrichtung mittels der vorliegenden Erfindung.

Bei der dargestellten Ausführungsform weist die Kopplungsvorrichtung ein Hydraulik-Gehäuse 35 mit mindestens einer wasserdicht ausgebildeten Innenkammer 36 auf, in welche zumindest ein von dem Bremseingabeelement 16 weggerichteter Abschnitt des Eingangskolbens 14 und ein von dem Hauptbremszylinder weggerichteter Abschnitt des Ausgangskolbens 12 hineinragen. Die Innenkammer 36 ist vorzugsweise zumindest teilweise mit einer Flüssigkeit, bevorzugter Weise mit der Hydraulikflüssigkeit (Bremsflüssigkeit) des mindestens einen mit dem Hauptbremszylinder 10 hydraulisch verbundenen Bremskreises, gefüllt. Über eine geeignete Ausbildung der Wände der Innenkammer 36 ist gewährleistbar, dass an den Kontaktflächen der Wände mit den Kolben 12 und 14 keine Flüssigkeit austritt. Das Ausbilden eines "variablen Leerwegs" in einer Flüssigkeit realisiert die unten genauer beschriebenen Vorteile gegenüber einer Ausbildung des Leerwegs als "Luftspalt". Die hier beschriebene Kopplungsvorrichtung ist jedoch nicht auf eine Anordnung der Kolben 12 und 14 in dem mit einer Flüssigkeit gefüllten Hydraulik-Gehäuse 35 beschränkt.

Vorteilhafterweise weist die Kopplungsvorrichtung auch einen Pedalsimulator 30 auf. Der Pedalsimulator 30 kann als Kolben-Zylinder-Einheit, wie beispielsweise als Plunger, ausgebildet sein. Der Pedalsimulator 30 kann über eine erste Leitung 31 mit der Innenkammer 36 verbunden sein. Das Anordnen der Kolben 12 und 14 in der mit Flüssigkeit gefüllten Innenkammer 36 macht diese kostengünstig realisierbare Ausbildung des Pedalsimulators 30 als Kolben-Zylinder-Einheit möglich. Ein Hineinverstellen des Eingangskolbens 14 in die Innenkammer 36 bewirkt in diesem Fall eine Verschiebung der Flüssigkeit aus der Innenkammer 36 in den Pedalsimulator 30 entgegen der auf den Kolben der Kolben-Zylinder-Einheit wirkenden Rückstellkraft. Der Fahrer spürt somit auch bei einer Betätigung des Bremseingabeelements 16, bei welcher der Ausgangskolben 12 noch in seiner Ausgangsstellung verbleibt obwohl der Eingangskolben mitverstellt wird, eine seiner Betätigung entgegenwirkende Rückstellkraft. Dies gewährleistet ein vorteilhaftes Bremsgefühl für den Fahrer bei der Betätigung des Bremseingabeelements 16 bereits vor einem Überwinden des Leerwegs.

Vorzugsweise weist der als Kolben-Zylinder-Einheit ausgebildete Pedalsimulator 30 eine nicht-lineare Federcharakteristik auf, welche einer standartgemäßen (vorteilhaften) Bremscharakteristik entspricht. Der Fahrer hat in diesem Fall bei der Betätigung des Bremseingabeelements 16 trotz des Verbleibens des Ausgangskolbens 12 in seiner Ausgangsstellung das gewohnheitsmäßige Bremsgefühl.

Insbesondere können der Pedalsimulator 30 und die Innenkammer 36 über zumindest eine zweite Leitung 34 hydraulisch mit einem mit dem Hauptbremszylinder 10 verbundenen Bremsmediumreservoir 28 (Bremsflüssigkeitsvorratsbehälter) verbunden sein. Zum Befüllen der Innenkammer 36 kann somit die Hydraulikflüssigkeit des Hauptbremszylinders 10 und des mindestens einen Bremskreises verwendet werden.

In einer vorteilhaften Weiterbildung sind der Pedalsimulator 30 und die Innenkammer 36 auch über ein weiteres Ventil 32 hydraulisch mit dem Bremsmediumreservoir 28 verbunden. Alternativ zu dem Bremsmediumreservoir 28 können der Pedalsimulator 30 und die Innenkammer 36 über das Ventil 32 und die zweite Leitung 34 auch mit einem anderen gegendruckfreien Hydraulikflüssigkeit-Speichervolumen hydraulisch verbunden sein.

In den oben beschriebenen Fällen ist mittels des Pedalsimulators 30 und/oder des Regelventils 32 ein Differenzdruck p zwischen einem Druck in der Innenkammer 36 und einem Druck in dem Bremsmediumreservoir 28, in dem gegendruckfreien Hydraulikflüssigkeit-Speichervolumen und/oder dem Atmosphärendruck einstellbar. Der Differenzdruck p kann insbesondere so eingestellt werden, dass für die auf das Bremsbetätigungselement 16 ausgeübte Simulatorgegenkraft Fs die folgenden Gleichungen (Gl 1) und (Gl 2) gelten:

$$(Gl\ 1)\quad Fs = p \cdot A\ ;$$

$$(Gl\ 2)\quad Fs + Fsys = Fk,$$

wobei A einer in die Innenkammer 36 hineinragenden Fläche des Eingangskolbens 14 und Fsys einer System-Rückwirkungskraft aus Federkräften der in dem Hydraulik-Gehäuse 35 angeordneten Federn und/oder Reibungskräften entsprechen und Fk die Kennlinie des Bremseingabeelements 16 (Pedalkennlinie) ist.

In diesem Fall bemerkt der Fahrer bei einer Betätigung des Bremseingabeelements 16 eine Gegenkraft aus einer Summe der System-Rückwirkungskraft Fsys der Ausgangsstange 12 und einer Simulatorgegenkraft Fs. Die Gleichungen (Gl 1) und (Gl 2) gelten sowohl bei einem geschlossenen Ventil 32, als auch bei einem Verzicht auf eine Anbindung des Pedalsimulators 30 an das Bremsmediumreservoir 28 mittels der zweiten Leitung 34 und dem Ventil 32.

Sofern das Ventil 32 geöffnet vorliegt, kann das bei einem Verstellen des Eingangskolbens 14 aus der Innenkammer 36 verdrängte Flüssigkeitsvolumen gegendruckfrei in das Bremsmediumreservoir 28 oder in ein entsprechendes Hydraulikflüssigkeit-Speichervolumen transferiert werden. Das Öffnen des Ventils 32 stellt eine Verbindung der Innenkammer 36 mit dem Bremsmediumreservoir 28 oder dem Hydraulikflüssigkeit-Speichervolumen her und bewirkt quasi einen Bypass des Simulators 30. Somit gilt bei einem offenen Ventil 32 die Gleichung (Gl 3):

$$(Gl\ 3)\quad Fs \rightarrow 0;$$

Der Fahrer hat damit nach einem Öffnen des Ventils 32 die Möglichkeit, die Bremsbetätigung schnell und mit einem relativ geringen Kraftaufwand auszuführen. Insbesondere kann der Fahrer in diesem Fall den Leerweg schnell und mit einem geringen Kraftaufwand überwinden.

Bevorzugter Weise ist das Ventil 32 ein stromlos offenes Ventil, welches sich zumindest in einen offenen Modus und in einen geschlossenen Modus elektrisch steuern lässt. Ein kostengünstiges Beispiel für das Ventil 32 ist ein stromlos offenes Schaltventil/Trennventil. Die stromlos offene Ausbildung des Ventils 32 gewährleistet den Vorteil, dass das Ventil 32 bei einer Funktionsbeeinträchtigung und/oder bei einem Ausfall der Elektronik des Bremssystems automatisch geöffnet wird. Der Fahrer kann somit in einer derartigen Situation den Leerweg leicht überwinden und das Fahrzeug mit einer vergleichsweise niedrigen Bremskraft in den Stillstand bringen.

In einer vorteilhaften Weiterbildung kann die Steuereinrichtung 20 oder eine zusätzliche Steuerung des Bremssystems derart ausgebildet sein, dass mittels der Steuereinrichtung 20 oder der Steuerung das Ventil 32 unter Berücksichtigung mindestens einer Größe/Information bezüglich einer Betätigungsgeschwindigkeit der Betätigung des Bremseingabeelements, einer zeitlichen Änderung der Betätigungsgeschwindigkeit, der Fahrerbremskraft, einer zeitlichen Änderung der Fahrerbremskraft, einer Betätigung des Gaspedals, einer zeitlichen Änderung der Betätigung des Gaspedals, einer zeitlichen Änderung der Betätigungsgeschwindigkeit der Betätigung des Gaspedals, eines Zustands mindestens einer Fahrzeugkomponente des Fahrzeugs, einer zeitlichen Änderung des Zustands, mindestens einer Fahrweise des Fahrzeugs, einer zeitlichen Änderung der Fahrweise, einer Verkehrssituation und/oder einer Umgebungssituation mittels eines weiteren Steuersignals 38 elektrisch gesteuert werden. Man kann dies auch so umschreiben, dass das Ventil 32 in Abhängigkeit von mindestens einer Bremssystem-, Fahrzeug- und/oder Umgebungsbedingung angesteuert wird. Beispiele für eine Größe/Information bezüglich einer Betätigungsgeschwindigkeit der Betätigung des Bremseingabeelements, einer zeitlichen Änderung der Betätigungsgeschwindigkeit, der Fahrerbremskraft, einer zeitlichen Änderung der Fahrerbremskraft sind oben bereits genannt. Eine berücksichtigte Zustandsgröße einer Komponente des rekuperativen Bremssystems kann beispielsweise ein Ladezustand der Batterie und/oder ein Betriebsmodus eines Generators sein. Ebenso kann die mindestens eine von der Steuereinrichtung 20/der Steuerung berücksichtigte Größe eine Fahrzeuggeschwindigkeit, eine Fahrzeugrichtung, eine Fahrzeugrichtungsänderung und/oder eine Gierrate umfassen. Eine Größe bezüglich einer Verkehrssituation und/oder einer Umgebungssituation kann außerdem ein von einem fahrzeugeigenen Umgebungserfassungssystem, wie beispielsweise von einem ACC-System, einem RadarSystem und/oder einem Airbag-Auslösesystem, bereitgestelltes Warnsignal sein. Anhand der hier aufgezählten charakteristischen Größen kann verlässlich erkannt werden, ob der Fahrer ein abruptes Abbremsen des Fahrzeugs oder ein langsames Abbremsen des Fahrzeugs bevorzugt. Ebenso ist anhand dieser Größen erkennbar, ob aufgrund der aktuellen Situation eine hohe Dynamik bei Abbremsen des Fahrzeugs wichtiger als die bei einem Rekuperieren gewonnene Energie und/oder als der Komfort des Verblendvorgangs ist.

Bei einer derartigen Weiterbildung besteht die Möglichkeit, insbesondere bei einem dynamischen/schnellen Betätigen der Bremse, einer plötzlichen Unterbrechung der Gaspedal-Betätigung, einer relativ hohen Geschwindigkeit des Fahrzeugs und/oder bei einem Erkennen einer Gefahrensituation, die auf das Bremseingabeelement 16 wirkende Gegenkraft zu Reduzieren und somit den Fahrer bei dem Bremsvorgang kraftmäßig zu entlassen und/oder ein schnelleres Abbremsen des Fahrzeugs zu ermöglichen.

In einer anderen Weiterbildung kann das Ventil 32 auch ein stetig stellbares/steuerbares/schaltbares Ventil sein. Die Steuereinrichtung 20/die Steuerung kann in diesem Fall dazu ausgebildet sein, das Ventil 32 unter Berücksichtigung von mindestens einer der oben aufgezählten Größen in einen bestimmten Öffnungszustand zu steuern. Dies gewährleistet ein schnelleres Variieren der auf das Bremseingabeelement 16 wirkenden Gegenkraft. Beispielsweise kann das Ventil 32 während einer Betätigung des Bremseingabeelements 16 kurz geöffnet werden, um den Fahrer ein besonders vorteilhaftes Bremsgefühl zu gewährleisten. Die Einsetzbarkeit der Kopplungsvorrichtung ist jedoch nicht auf eine Ausstattung mit dem Ventil 32 und einer damit zusammenwirkenden Steuereinrichtung 20 limitiert.

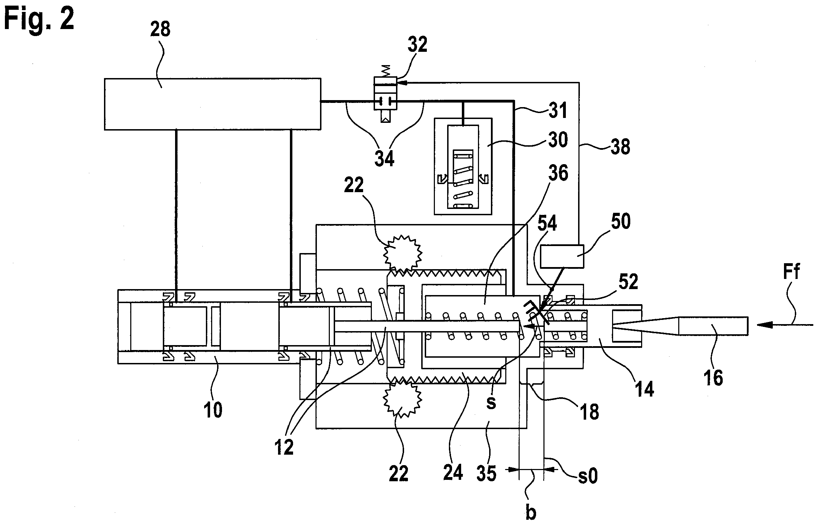

Fig. 2 zeigt eine schematische Darstellung einer Kopplungsvorrichtung, welche nicht von der vorliegenden Erfindung umfasst ist.

Die in Fig. 2 schematisch dargestellte Kopplungsvorrichtung weist bis auf die Auslegung der Fremdkraftbremseinrichtung keine/kaum Abweichungen zu der oben beschriebenen Ausführungsform auf. Auf eine erneute Beschreibung der Komponenten 10 bis 16, 22, 24 und 28 bis 36 wird deshalb hier verzichtet.

Alternativ oder Ergänzend zu der oben beschriebenen Ausführungsform umfasst die Kopplungsvorrichtung der Fig. 2 eine Steuereinrichtung 50, mittels welcher die Kopplungsvorrichtung aus mindestens dem ersten Betriebsmodus mit dem ersten Mindest-Einbremsweg in zumindest den zweiten Betriebsmodus mit dem zweiten Mindest-Einbremsweg kleiner als dem ersten Mindest-Einbremsweg überführbar ist. Ebenso kann die Kopplungsvorrichtung mittels der Steuereinrichtung 50 aus mindestens dem zweiten Betriebsmodus in zumindest den ersten Betriebsmodus überführbar sein. Die Steuereinrichtung 50 ist dazu ausgelegt, beim Steuern der Kopplungsvorrichtung zwischen den mindestens zwei Betriebsmoden mindestens eine Größe bezüglich einer Betätigungsgeschwindigkeit der Betätigung des Bremseingabeelements, einer zeitlichen Änderung der Betätigungsgeschwindigkeit, der Verstellgeschwindigkeit des Eingangskolbens 14, einer zeitlichen Änderung der Verstellgeschwindigkeit, der Fahrerbremskraft Ff, einer zeitlichen Änderung der Fahrerbremskraft Ff, eines Zustands mindestens einer Fahrzeugkomponente des Fahrzeugs, einer zeitlichen Änderung des Zustands, mindestens einer Fahrweise des Fahrzeugs und/oder einer zeitlichen Änderung der Fahrweise zu berücksichtigen. Als die mindestens eine Größe kann mindestens eine Größe bezüglich eines Zustands und/oder einer zeitlichen Änderung des Zustands einer Komponente eines rekuperativen Bremssystems berücksichtigt werden. Eine derartige Zustandsgröße einer Komponente des rekuperativen Bremssystems kann beispielsweise ein Ladezustand der Batterie und/oder ein Betriebsmodus eines Generators sein.

Ebenso kann die mindestens eine Größe eine Fahrzeuggeschwindigkeit, eine Fahrzeugrichtung, eine Fahrzeugrichtungsänderung und/oder eine Gierrate umfassen. Somit können auch von der Betätigung des Bremseingabeelements 16 unabhängige Größen für eine Festlegung eines vorteilhaften Betriebsmodus der Kopplungsvorrichtung berücksichtigt/ausgewertet werden. Da Möglichkeiten zum Bereitstellen der hier aufgezählten Größen an die Steuereinrichtung 50 mittels eines Sensors und/oder mittels einer Informationsausgabeeinrichtung bekannt sind, wird nicht weiter darauf eingegangen.

Die Steuereinrichtung 50 ist bei der dargestellten Ausführungsform zusätzlich dazu ausgelegt, einen (nicht dargestellten) Aktor einer Kraftübertragungskomponente 52 mittels eines Steuersignals 54 so anzusteuern, dass die Kraftübertragungskomponente 52 aus einer eingefahrenen Stellung des ersten Betriebsmodus in mindestens eine ausgefahrene Stellung zumindest des zweiten Betriebsmodus überführt wird. Die Kopplungsvorrichtung ist somit über ein Ausfahren der Kraftübertragungskomponente 52 aus dem ersten Betriebsmodus in zumindest den zweiten Betriebsmodus schaltbar. Entsprechend kann über ein Einfahren der Kraftübertragungskomponente 52 die Kopplungsvorrichtung aus mindestens dem zweiten Betriebsmodus in den ersten Betriebsmodus geschalten werden.

In dem ersten Betriebsmodus ist eine Kraftübertragung von dem aus seiner Ausgangsstellung s0 um einen Einbremsweg s zwischen dem zweiten Mindest-Einbremsweg und dem ersten Mindest-Einbremsweg verstellten Eingangskolben 14 auf den Ausgangskolben 12 über die in die eingefahrene Stellung gesteuerte Kraftübertragungskomponente 52 unterbunden. Demgegenüber ist in dem zweiten Betriebsmodus die Fahrerbremskraft Ff von dem aus seiner Ausgangsstellung s0 um einen Einbremsweg s zwischen dem zweiten Mindest-Einbremsweg und dem ersten Mindest-Einbremsweg verstellten Eingangskolben 14 auf den Ausgangskolben 12 über die in die mindestens eine ausgefahrene Stellung gesteuerte Kraftübertragungskomponente 52 übertragbar. Die Kraftübertragungskomponente 52 kann entweder an dem Ausgangskolben 12 oder an dem Eingangskolben verstellbar befestigt sein.

Die Fahrerbremskraft Ff kann somit in dem zweiten Betriebsmodus über die (ausgefahrene) Kraftübertragungskomponente 52 auf den Ausgangskolben 12 übertragen werden, obwohl der Eingangskolben 14 selbst den Ausgangskolben 12 nicht berührt/kontaktiert. Ebenso kann der Aktor der Kraftübertragungskomponente 52 mittels des Steuersignals 54 so ansteuerbar sein, dass bei einem Einfahren der Kraftübertragungskomponente 52 der Kraftschluss zwischen dem Ausgangskolben und dem aus seiner Ausgangsstellung s0 um einen Einbremsweg s zwischen dem zweiten Mindest-Einbremsweg und dem ersten Mindest-Einbremsweg verstellten Eingangskolben aufgehoben wird.

Die Kraftübertragungskomponente 52 kann auch als aktiv schaltbare Verriegelung bezeichnet werden. Beispielsweise ist die Kraftübertragungskomponente 52 als eine Klinke ausgebildet. Die Kraftübertragungskomponente 52 kann auch so ausgebildet sein, dass sie mehrere Verriegelungsstufen hat, beispielsweise als mehrstufige Klinke. Somit kann die Kopplungsvorrichtung zusätzlich zu dem ersten Betriebsmodus und dem zweiten Betriebsmodus noch zumindest einen dritten Betriebsmodus mit einem dritten Mindest-Einbremsweg kleiner als dem zweiten Mindest-Einbremsweg aufweisen.

Eine als Klinke realisierte Kraftübertragungskomponente 52 liegt im nicht-bestromten (stromlosen) Zustand vorzugsweise in der eingefahrenen Stellung vor.

Bevorzugter Weise ist eine derartige Kraftübertragungskomponente 52 per Elektromagnet entriegelbar, d.h. in die mindestens eine ausgefahrene Stellung überführbar. Somit ist die Kopplungsvorrichtung bei einem Ausfall der Fremdkraftbremseinrichtung, bzw. ihrer Stromversorgung, automatisch in einen Modus mit einem kürzeren Bremsweg schaltbar.

Optionalerweise kann die Steuereinrichtung 50 zusätzlich dazu ausgelegt sein, dass oben schon beschriebene Steuersignal 38 an das Ventil 32 auszugeben.

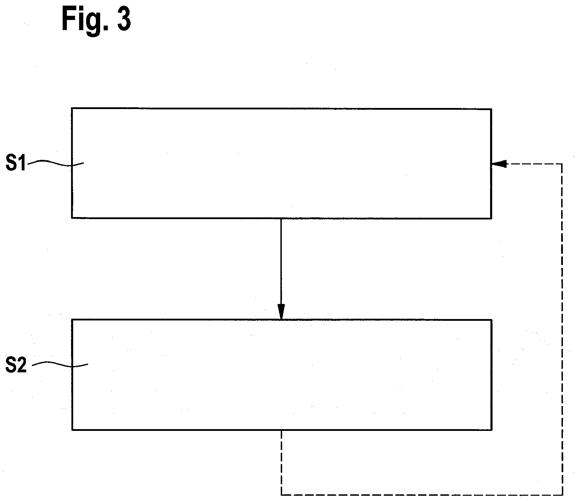

Fig. 3 zeigt ein Flussdiagramm zum Darstellen eines Verfahrens, welches nicht von der vorliegenden Erfindung umfasst ist.

Das hier beschriebene Verfahren ist für ein verlässliches Betreiben einer Kopplungsvorrichtung, mittels welcher ein Bremseingabeelement mit einem Hauptbremszylinder eines Fahrzeugs verbunden wird, geeignet. Die verwendbare Kopplungsvorrichtung umfasst zumindest eine bei einer Betätigung des Bremseingabeelements aus einer Ausgangsstellung um einen Einbremsweg (mit-)verstellten Eingangskolben und einen Ausgangskolben, auf welchen eine auf das Bremseingabeelement ausgeübte Fahrerbremskraft über den aus seiner Ausgangsstellung um einen Einbremsweg von mindestens einem vorgegebenen ersten Mindest-Einbremsweg verstellten Eingangskolben so übertragen wird, dass mittels der über den Eingangskolben auf den Ausgangkolben übertragenen Fahrerbremskraft ein Innendruck in dem Hauptbremszylinder gesteigert wird. Beispielsweise kann zum Ausführen des Verfahrens eine der oben beschriebenen Kopplungsvorrichtungen verwendet werden.

In einem Verfahrensschritt S1 wird die Kopplungsvorrichtung in einen ersten Betriebsmodus betrieben, in welchem der aus seiner Ausgangsstellung um einen Einbremsweg kleiner als dem ersten Mindest-Einbremsweg verstellte Eingangskolben so von dem Ausgangskolben beabstandet ist, dass eine Kraftübertragung von dem Eingangskolben auf den Ausgangskolben unterbunden wird. Somit besteht während des Verfahrensschritts S1 die Möglichkeit, die "Endkopplung" des Bremseingabeelements von dem Hauptbremszylinder zum Aktivieren eines Generators zu nutzen, ohne dass eine von dem Fahrer vorgegebene Soll-Verzögerung des Fahrzeugs überschritten wird.

In einem Verfahrensschritt S2 wird die Kopplungsvorrichtung in mindestens einen zweiten Betriebsmodus mit einem zweiten Mindest-Einbremsweg kleiner als dem ersten Mindest-Einbremsweg überführt. In dem zweiten Betriebsmodus der Kopplungsvorrichtung ist der aus seiner Ausgangsstellung um einen Einbremsweg kleiner als dem zweiten Mindest-Einbremsweg verstellte Eingangskolben so von dem Ausgangskolben beabstandet, dass eine Kraftübertragung von dem Eingangskolben auf den Ausgangskolben unterbunden wird. Allerdings wird die Fahrerbremskraft über den aus seiner Ausgangsstellung um einen Einbremsweg zwischen dem zweiten Mindest-Einbremsweg und dem ersten Mindest-Einbremsweg verstellten Eingangskolben auf den Ausgangskolben übertragen. Dies gewährleistet die oben schon beschriebenen Vorteile.

Bei Ausführen des Verfahrensschritts S2 kann mindestens eine Größe bezüglich einer Betätigungsgeschwindigkeit der Betätigung des Bremseingabeelements, einer zeitlichen Änderung der Betätigungsgeschwindigkeit, der Fahrerbremskraft, einer zeitlichen Änderung der Fahrerbremskraft, eines Zustands mindestens einer Fahrzeugkomponente des Fahrzeugs, einer zeitlichen Änderung des Zustands, mindestens einer Fahrweise des Fahrzeugs und/oder einer zeitlichen Änderung der Fahrweise ermittelt wird und die mindestens eine ermittelte Größe bei dem Überführen der Kopplungsvorrichtung in mindestens den zweiten Betriebsmodus berücksichtigt werden. Beispielsweise wird mindestens eine Größe bezüglich eines Zustands und/oder einer zeitlichen Änderung des Zustands einer Komponente eines rekuperativen Bremssystems berücksichtigt. Ebenso kann eine Fahrzeuggeschwindigkeit, eine Fahrzeugrichtung, eine Fahrzeugrichtungsänderung und/oder eine Gierrate als die mindestens eine Größe berücksichtigt werden.

In einer besonders vorteilhaften Ausführungsform wird eine Kraftübertragungskomponente bei einem Überführen der Kopplungsvorrichtung aus dem ersten Betriebsmodus in mindestens den zweiten Betriebsmodus aus einer eingefahrenen Stellung in mindestens eine ausgefahrene Stellung verstellt. Auf diese Weise ist gewährleistbar, dass die Fahrerbremskraft von dem aus seiner Ausgangsstellung um einen Einbremsweg zwischen dem zweiten Mindest-Einbremsweg und dem ersten Mindest-Einbremsweg verstellten Eingangskolben auf den Ausgangskolben über die in die mindestens eine ausgefahrene Stellung verstellte Kraftübertragungskomponente übertragen wird.

Zu einem späteren Zeitpunkt kann über ein Umschalten der Kopplungsvorrichtung der Verfahrensschritt S1 wiederholt werden.

**Patentansprüche**

1.  Kopplungsvorrichtung zum Verbinden eines Bremseingabeelements (16) mit einem Hauptbremszylinder (10) eines Fahrzeugs mit:

    einem Eingangskolben (14), welcher so an dem Bremseingabeelement (16) anordbar ist, dass der Eingangskolben (14) bei einer Betätigung des Bremseingabeelements (16) aus einer Ausgangsstellung (s0) um einen Einbremsweg (s) verstellbar ist; und
    einem Ausgangskolben (12), auf welchen eine auf das Bremseingabeelement (16) ausgeübte Fahrerbremskraft (Ff) über den aus seiner Ausgangsstellung (s0) um einen Einbremsweg (s)

von mindestens einem vorgegebenen ersten Mindest-Einbremsweg verstellten Eingangskolben (14) übertragbar ist, und welcher so an dem Hauptbremszylinder (10) anordbar ist, dass mittels der über den Eingangskolben (14) auf den Ausgangkolben (12) übertragenen Fahrerbremskraft (Ff) ein Innendruck in dem Hauptbremszylinder (10) steigerbar ist;
wobei zumindest in einem ersten Betriebsmodus der Kopplungsvorrichtung der aus seiner Ausgangsstellung (s0) um einen Einbremsweg (s) kleiner als dem ersten Mindest-Einbremsweg verstellte Eingangskolben (14) so von dem Ausgangskolben (12) beabstandet ist, dass eine Kraftübertragung von dem Eingangskolben (14) auf den Ausgangskolben (12) durch einen dazwischen liegenden Spalt (18) unterbunden ist;
wobei die Kopplungsvorrichtung zusätzlich in mindestens einen zweiten Betriebsmodus mit einem zweiten Mindest-Einbremsweg kleiner als dem ersten Mindest-Einbremsweg überführbar ist, wobei in dem zweiten Betriebsmodus der Kopplungsvorrichtung der aus seiner Ausgangsstellung (s0) um einen Einbremsweg (s) kleiner als dem zweiten Mindest-Einbremsweg verstellte Eingangskolben (14) so von dem Ausgangskolben (12) beabstandet ist, dass eine Kraftübertragung von dem Eingangskolben (14) auf den Ausgangskolben (12) unterbunden ist, und die Fahrerbremskraft (Ff) über den aus seiner Ausgangsstellung (s0) um einen Einbremsweg (s) zwischen dem zweiten Mindest-Einbremsweg und dem ersten Mindest-Einbremsweg verstellten Eingangskolben (14) auf den Ausgangskolben (12) übertragbar ist;
und wobei die Kopplungsvorrichtung eine Fremdkraftbremseinrichtung (20,22) umfasst, mittels welcher eine Fremdkraft zusätzlich auf den Ausgangskolben (12) so übertragbar ist, dass mittels der auf den Ausgangkolben (12) übertragenen Fremdkraft der Innendruck in dem Hauptbremszylinder (10) steigerbar ist;

**dadurch gekennzeichnet, dass**

der Ausgangskolben (12) mittels der Fremdkraftbremseinrichtung (20,22) mit einer ersten maximalen Anfangsverstellgeschwindigkeit (v0) verstellbar ist, welche kleiner als eine zweite maximale Anfangsverstellgeschwindigkeit (v) des aus seiner Ausgangsstellung (s0) verstellten Eingangskolbens (14) ist, wodurch ein Verstellen des Eingangskolbens (14) aus seiner Ausgangsstellung (s0) mit einer Verstellgeschwindigkeit (v) kleiner als eine durch die erste maximale Anfangsverstellgeschwindigkeit (v0) des Ausgangskolbens (12) vorgegebene Grenz-Verstellgeschwindigkeit ein Schließen des Spalts (18) bei einem größeren Verstellweg (s) des Eingangskolbens (14) bewirkt, während ein Verstellen des Eingangskolbens (14) aus seiner Ausgangsstellung (s0) mit einer Verstellgeschwindigkeit (v) größer als die vorgegebene Grenz-Verstellgeschwindigkeit zu einem Schließen des Spalts (18) bei einem kleineren Verstellweg (s) des Eingangskolbens (14) führt, und die Kopplungsvorrichtung mittels eines Betätigens des Bremseingabeelements (16) mit einer Betätigungsgeschwindigkeit, bei welcher der Eingangskolben (14) zumindest mit der vorgegebene Grenz-Verstellgeschwindigkeit aus seiner Ausgangsstellung (s0) verstellbar ist, automatisch aus dem ersten Betriebsmodus in den zweiten Betriebsmodus überführbar ist, ohne dass dazu eine Sensorik zum Ermitteln der Betätigungsgeschwindigkeit des Bremseingabeelements (16) notwendig ist.

2. Kopplungsvorrichtung nach Anspruch 1, wobei die Kopplungsvorrichtung ein Hydraulik-Gehäuse (35) mit einer zumindest teilweise mit einer Flüssigkeit gefüllten Innenkammer (36) umfasst, in welche der Eingangskolben (14) und der Ausgangskolben (12) zumindest teilweise hineinragen.

3. Kopplungsvorrichtung nach Anspruch 2, wobei die Innenkammer (36) des Hydraulik-Gehäuses (35) über zumindest eine erste Leitung (31) mit einem als Kolben-Zylinder-Einheit ausgebildeten Pedalsimulator (30) hydraulisch verbunden ist.

4. Kopplungsvorrichtung nach Anspruch 3, wobei der als Kolben-Zylinder-Einheit ausgebildete Pedalsimulator (30) eine nicht-lineare Federcharakteristik entsprechend einer Bremscharakteristik aufweist.

5. Bremssystem mit einer Kopplungsvorrichtung nach einem der vorhergehenden Ansprüche.


**Claims**

1. Coupling apparatus for connecting a brake input element (16) to a brake master cylinder (10) of a vehicle having:

   an input piston (14) which can be arranged on the brake input element (16) in such a way that the input piston (14) can be adjusted out of a starting position (s0) by a braking travel (s) in the case of an actuation of the brake input element (16); and
   an output piston (12), to which a driver brake force (Ff) which is exerted on the brake input element (16) can be transmitted via the input piston (14) which is adjusted out of its starting position (s0) by a braking travel (s) of at least one predefined first minimum braking travel, and which output piston (12) can be arranged on the brake master cylinder (10) in such a way that an internal pressure in the brake master cylinder (10) can be increased by means of the driver brake force (Ff) which is transmitted via the input piston (14) to the output piston (12);
the input piston (14) which is adjusted out of its starting position (s0) by a brake travel (s) smaller than the first minimum brake travel being spaced apart, at least in a first operating mode of the coupling apparatus, from the output piston (12) in such a way that a transmission of force from the input piston (14) to the output piston (12) is prevented by a gap (18) which lies between them;
it being possible, in addition, for the coupling apparatus to be transferred, in at least one second operating mode, with a second minimum brake travel smaller than the first minimum brake travel, the input piston (14) which is adjusted out of its starting position (s0) by a brake travel (s) smaller than the second minimum brake travel being spaced apart, in the second operating mode of the coupling apparatus, from the output piston (12) in such a way that a transmission of force from the input piston (14) to the output piston (12) is prevented, and the driver brake force (Ff) can be transmitted to the output piston (12) via the input piston (14) which is adjusted out of its starting position (s0) by a brake travel (s) between the second minimum brake travel and the first minimum brake travel;
and the coupling apparatus comprising a power-assisted brake device (20, 22), by means of which an external force can additionally be transmitted to the output piston (12) in such a way that the internal pressure in the brake master cylinder (10) can be increased by means of the external force which is transmitted to the output piston (12);

**characterized in that**
the output piston (12) can be adjusted by means of the power-assisted brake device (20, 22) at a first maximum initial adjusting speed (v0) which is lower than a second maximum initial adjusting speed (v) of the input piston (14) which is adjusted out of its starting position (s0), as a result of which an adjustment of the input piston (14) out of its starting position (s0) at an adjusting speed (v) lower than a limit adjusting speed which is predefined by the first maximum adjusting speed (v0) of the output piston (12) brings about a closure of the gap (18) in the case of a relatively great adjusting travel (s) of the input piston (14), wherein an adjustment of the input piston (14) out of its starting position (s0) at an adjusting speed (v) higher than the predefined limit adjusting speed leads to a closure of the gap (18) in the case of a relatively small adjustment travel (s) of the input piston (14), and the coupling apparatus can be transferred automatically out of the first operating mode into the second operating mode by means of an actuating of the brake input element (16) at an actuating speed, at which the input piston (14) can be adjusted out of its starting position (s0) at least at the predefined limit adjusting speed, without a sensor system for determining the actuating speed of the brake input element (16) being necessary to this end.

2. Coupling apparatus according to Claim 1, the coupling apparatus comprising a hydraulic housing (35) with an inner chamber (36) which is filled at least partially with a liquid and into which the input piston (14) and the output piston (12) protrude at least partially.

3. Coupling apparatus according to Claim 2, the inner chamber (36) of the hydraulic housing (35) being connected hydraulically via at least a first line (31) to a pedal simulator (30) which is configured as a piston/cylinder unit.

4. Coupling apparatus according to Claim 3, the pedal simulator (30) which is configured as a piston/cylinder unit having a non-linear spring characteristic in a manner which corresponds to a braking characteristic.

5. Brake system having a coupling apparatus according to one of the preceding claims.

## Revendications

1. Dispositif d'accouplement pour relier un élément d'amorce de freinage (16) avec un cylindre de freinage principal (10) d'un véhicule automobile comportant :

un piston d'entrée (14), qui peut être disposé sur l'élément d'amorce de freinage (16) de telle sorte que le piston d'entrée (14) lors d'un actionnement de l'élément d'amorce de freinage (16) puisse être déplacé à partir d'une position de départ (s0) le long d'un trajet de rodage (s) ; et un piston de sortie (12), sur lequel une force de freinage de véhicule (Ff) exercée sur l'élément d'amorce de conducteur (16) peut être transmise par l'intermédiaire du piston d'entrée (14) déplacé à partir de sa position de départ (s0) le long d'un trajet de rodage (s) par au moins un premier trajet de rodage minimal prescrit, et qui peut être disposé sur le cylindre de freinage principal (10) de telle sorte qu'au moyen de la force de freinage de conducteur (Ff) transmise au piston de sortie (12) par l'intermédiaire du piston d'entrée (14) une pression intérieure puisse être augmentée dans le cylindre de freinage principal (10) ;

au moins dans un premier mode de fonctionnement du dispositif d'accouplement, le piston d'entrée (14) déplacé à partir de sa position de départ (s0) le long d'un trajet de rodage (s) plus petit que le premier trajet de rodage minimal étant espacé du piston de sortie (12) de telle sorte qu'une transmission de force du piston d'entrée (14) au piston de sortie (12) soit empêchée par un interstice (18) situé entre eux ; le dispositif d'accouplement pouvant en outre passer dans au moins un deuxième mode de fonctionnement avec un deuxième trajet de rodage minimal plus petit que le premier trajet de rodage minimal, dans le deuxième mode de fonctionnement du dispositif d'accouplement, le piston d'entrée (14) déplacé à partir de sa position de départ (s0) le long d'un trajet de rodage (s) plus petit que le deuxième trajet de rodage minimal étant espacé du piston de sortie (12) de telle sorte qu'une transmission de force du piston d'entrée (14) au piston de sortie (12) soit empêchée et la force de freinage de conducteur (Ff) pouvant être transmise par l'intermédiaire du piston d'entrée (14) déplacé à partir de sa position de départ (s0) le long d'un trajet de rodage (s) entre le deuxième trajet de rodage minimal et le premier trajet de rodage minimal sur le piston de sortie (12) ; et le dispositif d'accouplement comprenant un dispositif de freinage à force étrangère (20,22) au moyen duquel une force étrangère peut en outre être transmise au piston de sortie (12), de telle sorte qu'au moyen de la force étrangère transmise au piston de sortie (12) la pression intérieure dans le cylindre de freinage principal (10) puisse être augmentée ;

**caractérisé en ce que**
le piston de sortie (12) peut être déplacé au moyen du dispositif de freinage à force étrangère (20,22) avec une première vitesse de déplacement initiale maximale (v0), qui est plus petite qu'une deuxième vitesse de déplacement initiale maximale (v) du piston d'entrée (14) déplacé à partir de sa position de départ (s0), moyennant quoi un déplacement du piston d'entrée (14) à partir de sa position de départ (s0) avec une vitesse de déplacement (v) plus petite qu'une vitesse de déplacement limite prescrite par la première vitesse de déplacement initiale maximale (s0) du piston de sortie (12) provoque une fermeture de l'interstice (18) en présence d'un plus grand trajet de déplacement(s) du piston d'entrée (14), alors qu'un déplacement du piston d'entrée (14) à partir de sa position de départ (s0) avec une vitesse de déplacement (v) plus grande que la vitesse de déplacement limite prescrite entraîne une fermeture de l'interstice (18) en présence d'un plus petit trajet de déplacement (s) du piston d'entrée (14) et le dispositif d'accouplement peut être passé automatiquement du premier mode de fonctionnement au deuxième mode de fonctionnement au moyen d'un actionnement de l'élément d'amorce de freinage (16) avec une vitesse d'actionnement, à laquelle le piston d'entrée (14) peut être déplacé au moins avec la vitesse de déplacement limite prescrite à partir de sa position de départ (s0), sans que dans ce but un capteur pour déterminer la vitesse de fonctionnement de l'élément d'amorce de freinage (16) soit nécessaire.

2.  Dispositif d'accouplement selon la revendication 1, dans lequel le dispositif d'accouplement comprend un carter hydraulique (35) avec une chambre intérieure (36) remplie au moins partiellement par un liquide, dans lequel le piston d'entrée (14) et le piston de sortie (12) pénètient au moins en partie.

3.  Dispositif d'accouplement selon la revendication 2, dans lequel la chambre intérieure (36) du carter hydraulique (35) est reliée hydrauliquement par l'intermédiaire d'au moins une première conduite (31) avec un simulateur de pédale (30) conçu comme une unité cylindre-piston.

4.  Dispositif d'accouplement selon la revendication 3, dans lequel le simulateur de pédale (30) conçu comme une unité cylindre-piston présente une caractéristique de ressort non linéaire correspondant à une caractéristique de freinage.

5.  Système de freinage comportant un dispositif d'accouplement selon une des revendications précédentes.

# Fig. 1

EP 2 598 385 B1

Fig. 2

EP 2 598 385 B1

# Fig. 3

S1

S2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009033499 A1
- DE 102009047263 A1
- DE 102007016862 A1